# DEMANDE DE BREVET EUROPEEN

(11) **EP 2 495 454 A1**
(43) Date de publication de la demande: **05.09.2012**
(21) Numéro de dépôt: 12156936.2
(22) Date de dépôt: 24.02.2012
(51) Int. Cl.: F16B 7/04, F16B 7/18

(54) **Dispositif pour fixer un moyen de fixation dans l'extrémité d'un profil creux tel qu'un barreau**

(30) Priorité: 01.03.2011 FR 1100612
(71) Demandeur: Grillages Vermigli SA, 83170 Brignoles (FR)
(72) Inventeur: Coeffic, Yvon - Clément - Robert, 83170 Brignoles (FR); Thys, Laurent - Maurice - Adrien, 83170 Brignoles (FR)
(74) Mandataire: de Zeeuw, Johan Diederick

(57) **Abrégé**

La présente invention concerne un dispositif pour fixer un moyen de fixation dans l'extrémité d'un profil creux (10) tel qu'un barreau, comprenant une première partie (1) et une deuxième partie (2) adaptées pour entrer ensemble à l'intérieur dans l'extrémité de ce profil creux, dans lequel cette première partie et cette deuxième partie délimitent ensemble un espace destiné à recevoir et fixer ce moyen de fixation et dans lequel le dispositif est pourvu d'un coinceur (30,31), adapté pour séparer la première partie de cette deuxième partie lorsqu'elles sont reçues à l'intérieur de l'extrémité du profil creux, permettant de coincer cette première et cette deuxième partie contre la paroi intérieure du profil creux.

## Description

L'invention concerne un dispositif pour fixer un moyen de fixation dans l'extrémité d'un profil creux tel qu'un barreau, comprenant une première partie et une deuxième partie adaptées pour entrer ensemble à l'intérieur dans l'extrémité de ce profil creux, dans lequel cette première partie et cette deuxième partie délimitent ensemble un espace destiné à recevoir et fixer ce moyen de fixation et dans lequel le dispositif est pourvu d'un coinceur, adapté pour séparer la première partie de cette deuxième partie lorsqu'elles sont reçues à l'intérieur de l'extrémité du profil creux, permettant de coincer cette première et cette deuxième partie contre la paroi intérieure du profil creux.

Le dispositif selon l'invention est particulièrement adapté pour fixer un premier profil creux à un deuxième profil creux. Une utilisation possible peut être la connexion d'un barreaudage à un poteau vertical.

Dans l'art antérieur, plusieurs dispositifs sont divulgués permettant de fixer un barreaudage à un poteau. La plupart du temps, la fixation du barreaudage au poteau est réalisée en atelier grâce à une soudure ou bien grâce à une pièce mécanique. Cette pièce mécanique peut, par exemple, comporter une vis et un boulon. Après la fixation du poteau et du barreaudage, l'ensemble peut être posé à l'endroit de l'utilisation.

D'autres moyens de fixation d'un barreaudage à un poteau sont connus, dans lesquels les moyens de fixation sont adaptés pour fixer ce barreaudage au poteau à l'aide de pièces mécaniques ne donnant pas de liberté concernant l'orientation ou l'inclinaison du barreaudage par rapport au poteau une fois que l'un est connecté à l'autre. Les systèmes connus dans l'art antérieur ne sont pas adaptés pour permettre une inclinaison horizontale du barreaudage par rapport au poteau.

Le but de la présente invention est de fournir un dispositif qui permet une fixation sûre et solide d'un barreaudage à un poteau, et de façon simultanée, permet également une certaine flexibilité en ce qui concerne l'orientation dudit barreaudage par rapport au poteau.

L'objet de l'invention est un dispositif pour fixer un moyen de fixation dans l'extrémité d'un profil creux tel qu'un barreau, comprenant une première partie et une deuxième partie adaptées pour entrer ensemble à l'intérieur dans l'extrémité de ce profil creux, dans lequel cette première partie et cette deuxième partie délimitent ensemble un espace destiné à recevoir et fixer ce moyen de fixation et dans lequel le dispositif est pourvu d'un coinceur, adapté pour séparer la première partie de cette deuxième partie lorsqu'elles sont reçues à l'intérieur de l'extrémité du profil creux, permettant de coincer cette première et cette deuxième partie contre la paroi intérieure du profil creux.

Selon la présente invention, deux éléments sont reçus à l'extrémité d'un barreau qui, ensemble, encerclent les moyens de fixation pouvant être utilisés ultérieurement pour fixer le barreaudage au poteau. Les deux éléments reçus à l'extrémité du barreau délimitent ensemble un espace permettant de recevoir ces moyens de fixation. Selon l'invention, la forme de ces moyens de fixation et l'espace sont adaptés pour permettre une orientation desdits moyens de fixation par rapport aux première et deuxième parties du dispositif.

Selon un mode de réalisation préféré, le coinceur est une vis.

Selon un mode de réalisation préféré, le coinceur est adapté pour effectuer, de façon simultanée, la séparation de la première et de la deuxième partie et fixer le moyen de fixation à l'intérieur de l'espace délimité par les première et deuxième parties.

Selon un mode de réalisation préféré, la première partie est identique à la deuxième partie.

Selon un mode de réalisation préféré, l'espace pour recevoir le moyen de fixation est sphérique.

Selon un mode de réalisation préféré, la première partie et la deuxième partie sont liées pour former un seul élément.

Selon un mode de réalisation préféré, la première partie et la deuxième partie sont réalisées en aluminium.

Un plastique adapté pouvant être utilisé pour le dispositif selon l'invention est, par exemple, le PA66. De façon alternative, il est possible d'utiliser un polyéthylène de haute densité « HDPE ».

L'invention sera mieux appréciée en faisant référence à la description qui suit et qui fait référence aux figures dans lesquelles :
- la figure 1 montre, de façon schématique, le montage d'un premier dispositif selon l'invention dans l'extrémité d'un barreau,
- la figure 2 montre la fixation de l'extrémité d'un barreau à un poteau, en utilisant le premier mode de réalisation du dispositif selon l'invention,
- la figure 3 montre, en vue de dessus, une partie du dispositif selon les figures 1 et 2,
- les figures 3a à 3d montrent les détails de la partie selon la figure 3,
- la figure 4 montre, en vue de dessus, la partie selon la figure 3,
- la figure 5 montre la coupa AA selon la figure 3,
- la figure 6 montre la coupe BB selon la figure 3,
- la figure 7a montre en détail le moyen de fixation pouvant être fixé à l'extrémité du barreau,
- la figure 7b montre le moyen de fixation selon la figure 7a en coupe BB,
- la figure 7c montre le moyen de fixation selon la figure 7a en coupe AA,
- la figure 8a montre, en vue de côté, avec les deux parties liées pour former un seul élément, un deuxième mode de réalisation du dispositif selon l'invention,
- la figure 8b montre le dispositif selon la figure 8a en coupe,
- la figure 9a montre le dispositif selon la figure 8b selon la coupe AA,
- la figure 9b montre le dispositif selon la figure 8a en vue de dessus,
- la figure 10 montre, en vue de dessus, un mode de réalisation du dispositif selon l'invention pour recevoir un moyen de fixation de forme sphérique,
- la figure 11 montre le dispositif selon la figure 10 vu du côté gauche,
- la figure 12 montre le dispositif selon la figure 10 vu du côté droit,
- la figure 13a montre le moyen de fixation pouvant coopérer avec le mode de réalisation du dispositif selon l'invention selon la figure 10, 11 et 12, en coupe, et
- la figure 13b montre le dispositif selon la figure 13a en vue de dessus.

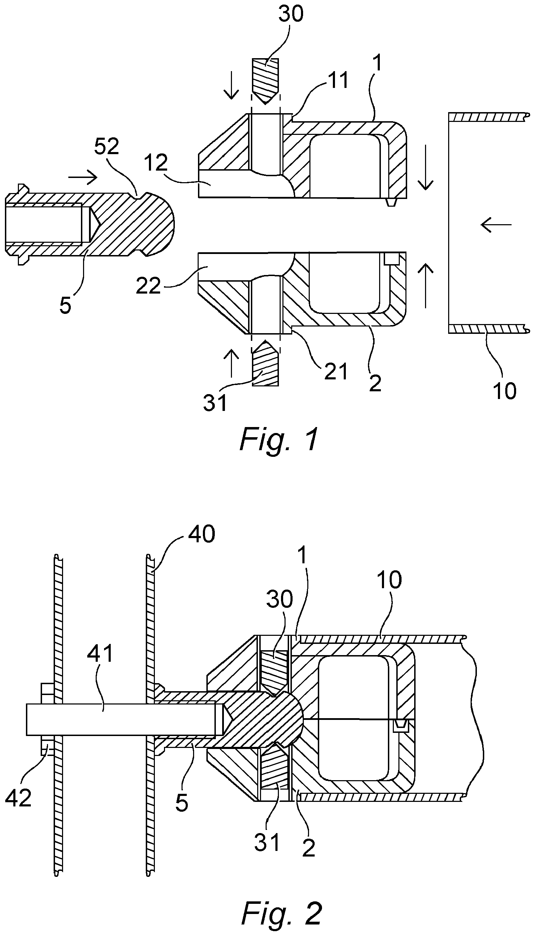

L'invention fournit un support récepteur pour fixer un moyen de fixation à l'intérieur d'un barreau et fixer ledit barreau à un deuxième élément tel qu'un poteau. La fonctionnalité de l'invention est montrée en figures 1 et 2.

Dans la figure 1, une première partie 1 et une deuxième partie 2 forment un support récepteur pour fixer un moyen de fixation 5 à l'intérieur de l'extrémité d'un barreau 10. Les dimensions extérieures de l'ensemble formé par les parties 1 et 2 sont justes inférieures aux dimensions intérieures du barreau 10.

La première partie 1 et la deuxième partie 2 entrent à l'intérieur du barreau 10 jusqu'aux butées 11 et 21, faisant partie de la première partie 1 et de la deuxième partie 2.

La première partie 1 est pourvue d'un espace intérieur 12 permettant de coopérer avec un espace intérieur 22 de la deuxième partie pour délimiter ensemble un espace pour recevoir le moyen de fixation 5.

Lorsque la première partie 1 et la deuxième partie 2 sont reçues à l'intérieur de l'extrémité du barreau 10, et lorsque l'élément de fixation 5 est reçu à l'intérieur de l'espace 12, 22, le moyen de fixation 5 peut être fixé à l'intérieur de l'espace 12, 22 grâce à des vis 30, 31. De façon alternative, une seule vis 30 peut être utilisée pour obtenir la fixation de la première partie 1 et de la deuxième partie 2 à l'intérieur du barreau 10.

L'ensemble, formé de la première partie 1, de la deuxième partie 2, de la fixation 5 et des vis 30, 31, est montré en figure 2. La figure 2 montre que les vis 30, 31 ont deux fonctions.

Dans un premier temps, les vis 30, 31 permettent de s'assurent que le moyen de fixation 5 ne peut pas sortir de l'espace 12, 22 délimité grâce à la première partie 1 et à la deuxième partie 2.

Dans un deuxième temps, les vis 30, 31 assurent une fonction d'écarteur. En d'autres termes, plus la pression exercée sur l'élément de fixation 5 par lesdites vis est forte, plus importante sera la force exercée sur la première partie 1 et le premier élément 2, leur permettant ainsi de s'écarter et de se coincer sur les parois intérieures du barreau 10. De façon simultanée, l'on s'assure que l'élément de fixation 5 est correctement fixé et ne peut plus sortir de l'espace 12, 22 délimité par la première partie 1 et la deuxième partie 2.

Lorsque l'élément de fixation 5 est correctement fixé sur l'extrémité du barreau 10, grâce à la première partie 1 et à la deuxième partie 2, les moyens de fixation 5 peuvent être utilisés pour fixer l'ensemble, formé par le barreau 10, la première partie 1, la deuxième partie 2 et les moyens de fixation 5, sur un deuxième barreau sous la forme, par exemple, d'un poteau 40. Cette fixation peut être réalisée à l'aide de tout moyen adapté, par exemple une tige filetée 41 et un écrou 42.

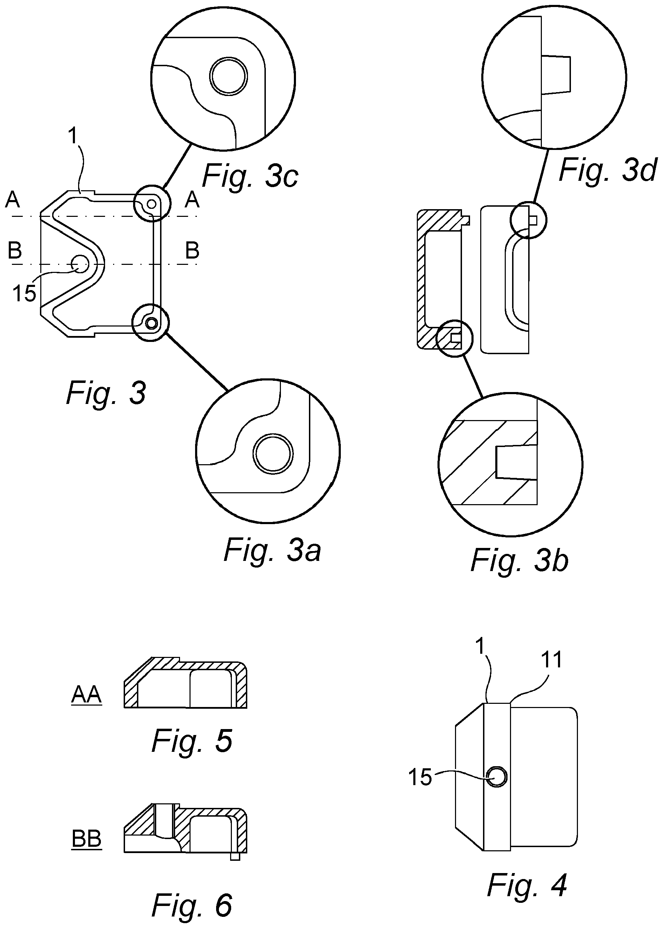

La figure 3 montre une première partie 1, vue de dessus. Le trou 15 est visible en figure 3, lequel trou reçoit les vis 30, 31 et permet de fixer l'élément de fixation 5 à l'intérieur de l'espace 12.

Comme indiqué en figures 1 et 2, l'élément de fixation 5 est pourvu d'une encoche 52 qui est adaptée pour recevoir l'extrémité des vis 30, 31. Cette encoche permet de s'assurer que l'élément de fixation 5 n'est pas uniquement retenu à l'intérieur de l'espace 12, 22, délimité par la première partie et la deuxième partie 2, par la force exercée par les vis 30, 31, mais que la fixation de l'élément de fixation est également assurée de façon mécanique par la forme des vis 30, 31 qui coopèrent avec l'encoche 52.

La figure 3 montre clairement que l'espace 12, permettant de recevoir des moyens de fixation 5, présente une forme triangulaire. Cela signifie que lesdits moyens de fixation 5 peuvent être orientés par rapport à l'axe central du barreau 10 lorsque les moyens de fixation sont fixés entre le premier élément 1 et le deuxième élément 2. La forme de l'espace 12 permet ainsi l'orientation du barreau 10 par rapport au deuxième élément, par exemple le poteau 40 (voir figure 2), afin d'ajuster ledit barreau par rapport à sa fixation.

La première partie 1 et la deuxième partie 2 présentent la même forme. Afin de s'assurer que la première partie 1 et une deuxième partie 2 peuvent coopérer, les deux sont pourvues, d'un côté, d'un trou (tel que montré en figure 3a, en vue de dessus et en figure 3b, en coupe) et, d'un autre côté, d'une protubérance (tel que montré en figure 3c, en vue de dessus et en figure 3d, en vue de côté).

Lorsque la première partie 1 et la deuxième partie 2 sont posées l'une sur l'autre, la protubérance de la première partie 1 est reçue dans l'orifice de la deuxième partie 2 et vice versa.
La figure 4 montre la première partie 1 vue de dessus sur laquelle l'on voit clairement la butée 11 qui est formée pour déterminer la distance sur laquelle la première partie 1 (et la deuxième partie 2 dans le même sens) peut être reçue à l'intérieur du barreau 10.
Les figures 5 et 6 montrent des vues en coupe selon les lignes AA et BB tel qu'indiqué dans la figure 3.

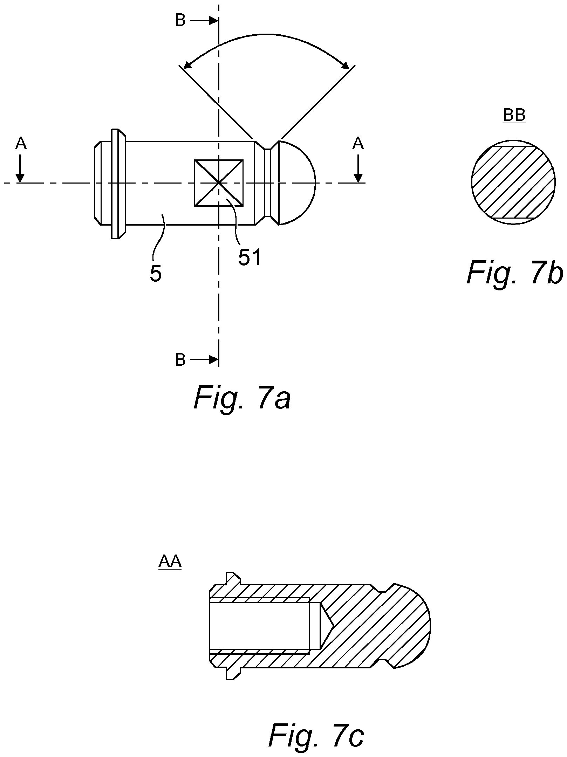

La figure 7a montre de façon détaillée le moyen de fixation 5.
La figure 7b montre une coupe BB (voir 7a). Sur sa circonférence, le moyen de fixation 5, essentiellement de forme cylindrique, est pourvu d'un ou de plusieurs éléments plats 51 pouvant, par exemple, recevoir des instruments et pouvant mieux manipuler les moyens de fixation 5 lors de la fixation elle-même.

Comme montré en figure 7c, l'intérieur du moyen de fixation 5 est pourvu d'un espace fileté pour recevoir, par exemple, une tige filetée 41.

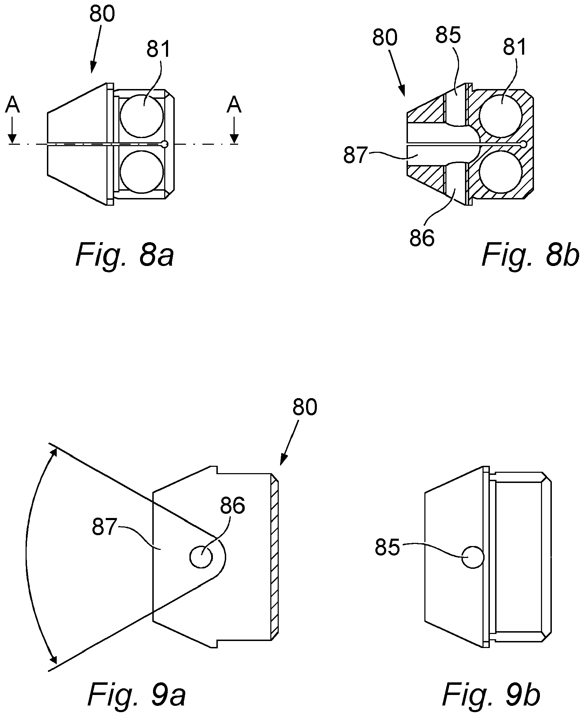

Les figures 8a, 8b, 9a et 9b montrent un deuxième mode de réalisation d'un dispositif selon l'invention, lequel peut coopérer avec le moyen de fixation 5 selon les figures 7a-7c.

Contrairement à ce qui est montré sur la première partie 1 et sur la deuxième partie 2 des figures 1, 2 et 3, le dispositif selon les figures 8a, 8b, 9a et 9b est une pièce unique. Les fonctionnalités du dispositif 80 selon la figure 8a, 8b, 9a et 9b est similaire aux fonctionnalités de la première partie 1 et de la deuxième partie 2 tel que décrit dans les figures 1 et 2.

Le dispositif 80 est pourvu d'orifices 81 permettant d'alléger le dispositif 80 et éviter de gaspiller de la matière lors de la fabrication dudit dispositif 80.

De façon similaire à la première partie 1 et à la deuxième partie 2, tel que montré en figure 1 et en figure 2, le dispositif 80 est pourvu d'une première ouverture 85 filetée, permettant de recevoir une première vis, et d'une deuxième ouverture filetée 86, permettant de recevoir une deuxième vis.

Lorsque le moyen de fixation 5 est reçu à l'intérieur de l'espace 87 se trouvant à l'intérieur du dispositif 80, les deux vis peuvent être utilisées pour fixer le dispositif 5 à l'intérieur du dispositif 80 et s'assurer que les deux parties dudit dispositif 80 peuvent s'écarter l'une par rapport à l'autre pour assurer une fixation optimale du dispositif 80 à l'intérieur de l'extrémité d'un barreau 10.

En d'autres termes, la fonctionnalité, comme indiqué ci-dessus, est quasiment identique au dispositif décrit par rapport aux figures 1 et 2.

La figure 9a montre le dispositif dans une coupe, selon AA, indiquée en figure 8a. Le dispositif 80 possède un espace intérieur 87, sous forme triangulaire, ladite forme triangulaire permettant un alignement d'un barreau par rapport à sa place de fixation telle que décrite en figure 3. Selon l'invention, le barreau 10 peut être fixé avec un angle maximum de 30° par rapport à une fixation droite, soit dans une première direction, soit dans une deuxième direction, dans le plan horizontal. En d'autres termes, le barreau peut être positionné dans le plan horizontal, avec une différence de 60° entre une première fixation extrême et une deuxième fixation extrême.

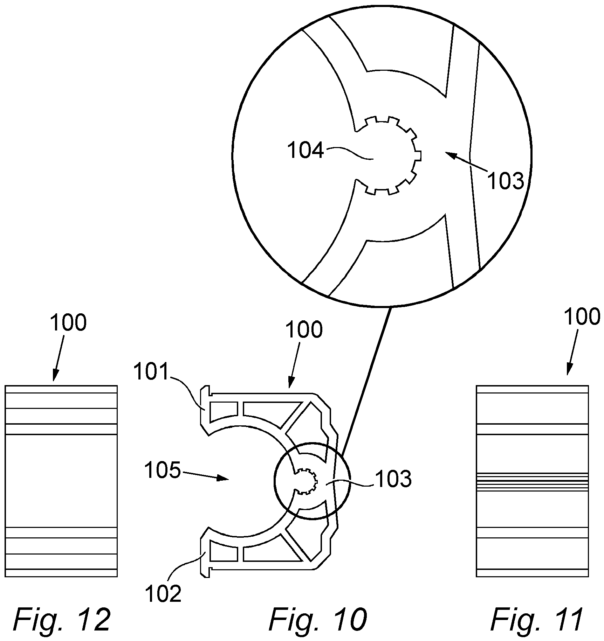

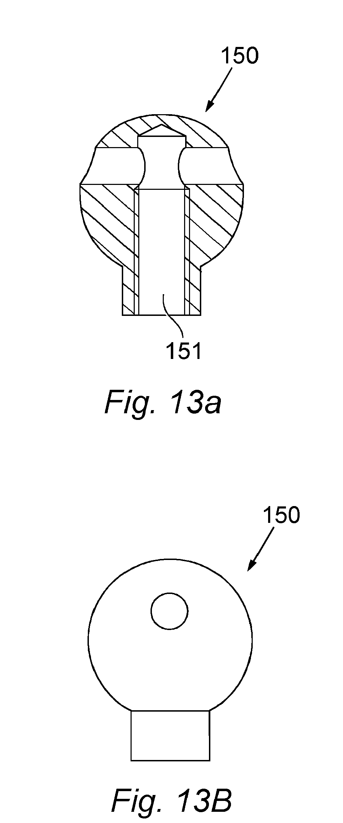

La figure 10 montre un troisième dispositif selon l'invention, ledit dispositif étant adapté pour coopérer avec un moyen de fixation sphérique tel que montré en figures 13a et 13b. Le dispositif 100 selon la figure 10 a essentiellement la forme d'un « U ». La première jambe 101 de ce « U » et la deuxième jambe 102 de ce « U » sont liées l'une à l'autre grâce à une charnière 103. Un espace 104 est présent à côté de cette charnière 103, lequel reçoit un écarteur tel qu'une vis pour que, lorsque le dispositif 100 est reçu à l'extrémité d'un barreau, l'écarteur (telle qu'une vis) puisse être utilisé pour s'assurer que les extrémités des jambes 101 et 102 sont écartées pour fixer correctement le dispositif 100 à l'intérieur d'un barreau.

L'espace 105, délimité par les deux jambes 101 et 102 du dispositif 100, peut être utilisé pour recevoir un dispositif de fixation 150, tel que montré dans les figures 13a et 13b. La partie sphérique de cet élément de fixation 150 est entrée dans l'espace 105, entre les jambes 101 et 102, avant que l'ensemble du dispositif 100 et l'élément de fixation 150 ne soient entrés à l'intérieur de l'extrémité d'un barreau 10. Lorsque les deux sont reçus à l'intérieur du barreau, l'écarteur peut être inséré dans l'espace 104 afin d'écarter les jambes 101 et 102, fixant ainsi le dispositif 100 à l'intérieur d'un barreau.

Après cette fixation, l'élément de fixation 150 peut être bougé et permettre ainsi l'orientation du barreau dans l'espace intérieur 87 donnant la possibilité d'orienter ledit barreau par rapport au poteau 40.

Comme montré en figure 13a, l'élément de fixation 150 est pourvu, en son intérieur, d'un orifice fileté 151 permettant de recevoir tout moyen de fixation adapté tel qu'une tige.

## Revendications

1. Dispositif pour fixer un moyen de fixation (5) dans l'extrémité d'un profil creux (10) tel qu'un barreau, comprenant une première partie (1, 101) et une deuxième partie (2, 102) adaptées pour entrer ensemble à l'intérieur dans l'extrémité de ce profil creux (10), dans lequel cette première partie (1, 101) et cette deuxième partie (2, 102) délimitent ensemble un espace (12, 22 ; 87, 105) destiné à recevoir et fixer ce moyen de fixation (5) et dans lequel le dispositif est pourvu d'un coinceur (30, 31 ), adapté pour séparer la première partie (1, 101) de cette deuxième partie (2, 102) lorsqu'elles sont reçues à l'intérieur de l'extrémité du profil creux (10), permettant de coincer cette première (1, 101) et cette deuxième partie (2, 102) contre la paroi intérieure du profil creux (10).

2. Dispositif selon la revendication 1, dans lequel le coinceur est une vis (30, 31).

3. Dispositif selon la revendication 1 ou 2, dans lequel le coinceur (30, 31 ) est adapté pour effectuer, de façon simultanée, la séparation de la première (1, 101) et de la deuxième partie (2, 102) et fixer le moyen de fixation (5) à l'intérieur de l'espace (12, 22 ; 87, 105) délimité par les première (1, 101) et deuxième parties (2, 102).

4. Dispositif selon la revendication 1, 2 ou 3, dans lequel la première partie 1, 101) est identique à la deuxième partie (2, 102).

5. Dispositif selon l'une des revendications 1 à 4, dans lequel la première partie et la deuxième partie sont liées pour former un seul élément (80, 100).

6. Dispositif selon l'une des revendications 1 à 5, dans lequel l'espace (105) pour recevoir le moyen de fixation (5) est sphérique.

7. Dispositif selon l'une des revendications 1 à 5, dans lequel la première partie (1, 101) et la deuxième partie (2, 102) sont réalisées en aluminium.

8. Dispositif selon l'une des revendications 1 à 7, dans lequel la première partie (1, 101) et la deuxième partie (2, 102) sont réalisées en Zamac ou, de façon alternative, sont réalisées d'un plastique adapté tel que « HDPE ».
